Europäisches Patentamt

European Patent Office

Office européen des brevets

(11) Veröffentlichungsnummer: **0 472 763 A1**

# (12) EUROPÄISCHE PATENTANMELDUNG

(21) Anmeldenummer: **90116623.1**

(22) Anmeldetag: **30.08.90**

(51) Int. Cl.⁵: **A01K 11/00**

(43) Veröffentlichungstag der Anmeldung:
**04.03.92 Patentblatt 92/10**

(84) Benannte Vertragsstaaten:
**AT CH DE DK ES FR GB GR IT LI NL SE**

(71) Anmelder: **Chu, Chun-Ta**
**No. 26, ping An Road, Ta Tung Tsun, Tien Lian Hsiang**
**Kaohsiung Hsien(TW)**

(72) Erfinder: **Chu, Chun-Ta**
**No. 26, ping An Road, Ta Tung Tsun, Tien Lian Hsiang**
**Kaohsiung Hsien(TW)**

(74) Vertreter: **Hübscher, Heiner, Dipl.-Ing. et al**
**Spittelwiese 7**
**A-4020 Linz(AT)**

(54) **Ohrmarke für Tiere.**

(57) Die Ohrmarke für Tiere besitzt einen Markenteil (1) in Form einer Platte aus zwei relativ dünnen Schichten (11, 12), zwischen denen entsprechende Markierungen (114) angebracht sind. Die erste Schicht (11) besteht aus transparentem, biegsamem Material und ist in zwei gleiche Plattenabschnitte (112, 113) unterteilt, wobei zwischen diesen Abschnitten (112, 113) eine Biegenut (111) und an der Außenseite des ersten Abschnittes (112) wenigstens ein Loch (115) vorgesehen sind. Zur Befestigung des Markenteiles (1) dient ein Stift (2) mit einem Schaft (23) und einem konisch vergrößerten Abschnitt (231) an dem einen Ende und einem Flansch (22) am anderen Ende, wobei der konisch vergrößerte Abschnitt (231) einen Längsschlitz (2310) und eine vorstehende Oberfläche (234) aufweist.

EP 0 472 763 A1

Diese Erfindung bezieht sich auf eine Ohrmarke für Tiere zur Identifizierung von Haustieren, wie Schafen, Kühen usw.

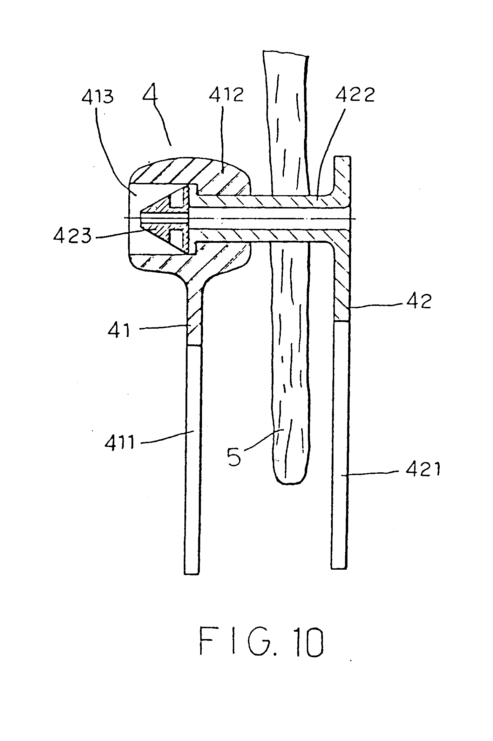

Die in Fig. 10 gezeigte herkömmliche Ohrmarke 4 für Tiere besteht hauptsächlich aus einem Markenteil 41 und einem Stift 42. Dieses Markenteil 41 umfaßt einen relativ dünnen Plattenabschnitt 411, der auf seiner Vorderseite eine Kennzeichnung, z. B. eine Zahl, aufweist, und einen oberen Abschnitt 412, der in Querrichtung einen zweistufigen Durchgang 413 aufweist. Der Stift 42 umfaßt einen relativ dünnen Plattenabschnitt 421, der an der Vorderseite mit einem kreisförmigen Stab 422 versehen ist.

Der kreisförmige Stab 422 des Stiftes 42 erstreckt sich durch das Loch im Ohr 5 des Tieres und wird in den Durchgang 413 des oberen Abschnittes des Markenteils 41 eingesetzt und arretiert sich selbst darin.

Diese bekannte Ohrmarke kann herausgerissen werden und verlorengehen, wenn sich die Tiere gegenseitig jagen und beißen. Das Symbol auf der Marke kann unklar werden, wenn sich das Tier an einer Wand oder anderen Gegenständen reibt, die diese Marke zerkratzen.

Folglich ist es Aufgabe dieser Erfindung, eine Ohrmarke für Tiere zu schaffen, die die Nachteile der bekannten Ohrmarke beseitigt.

Weiterhin ist es Aufgabe dieser Erfindung, eine Ohrmarke für Tiere zu schaffen, die faltbar ist und nicht aus dem Ohr herausgerissen werden kann, wenn sie einmal angebracht worden ist.

Weiterhin ist es Aufgabe dieser Erfindung, eine Ohrmarke für Tiere zu schaffen, die aus transparentem Material gefertigt ist und zumindest ein geprägtes Kennzeichen aufweist, um die Identifizierung der Tiere zu erleichtern.

Weiterhin ist es Aufgabe dieser Erfindung, eine Ohrmarke für Tiere zu schaffen, die einen einfachen Aufbau aufweist, ökonomisch herstellbar ist und leicht zusammengebaut werden kann.

Diese Aufgaben werden durch eine Ohrmarke für Tiere gemäß den Schutzansprüchen gelöst.

Die beigefügten Zeichnungen zeigen:

Fig. 1    eine Perspektivansicht einer bevorzugten Ausführungsform der erfindungsgemäßen Ohrmarke, die zwei getrennte Schichten aufweist,

Fig. 2    die Schichten der in Fig. 1 gezeigten Marke im zusammengefügten Zustand,

Fig. 3    einen Querschnitt des Stiftes der bevorzugten Ausführungsform dieser Erfindung,

Fig. 4    einen Querschnitt der erfindungsgemäßen Ohrmarke im zusammengebauten Zustand,

Fig. 5    einen Teilschnitt durch herkömmliche Lochzangen, die zum Anbringen der erfindungsgemäßen Ohrmarke an das Ohr des Tieres verwendet werden,

Fig. 6    einen Teilschnitt, der das Anbringen der Ohrmarke mit dem in Fig. 5 gezeigten Werkzeug zeigt,

Fig. 7    eine Teilvorderansicht einer Kuh, die am Ohr die erfindungsgemäße Ohrmarke trägt,

Fig. 8    eine weitere Perspektivansicht einer anderen Ausführungsform der erfindungsgemäßen Ohrmarke,

Fig. 9    einen Querschnitt der in Fig. 8 gezeigten Ohrmarke und

Fig. 10    einen Querschnitt der herkömmlichen Ohrmarke, die an das Ohr eines Tieres angebracht ist.

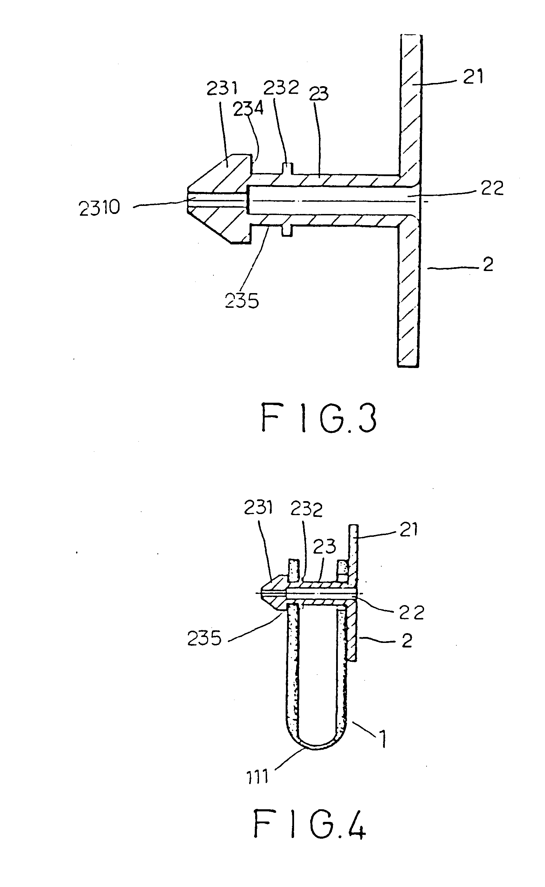

Wie es in Fig. 4 gezeigt ist, umfaßt die erfindungsgemäße Ohrmarke für Tiere im allgemeinen ein Markenteil 1 und einen Stift 2.

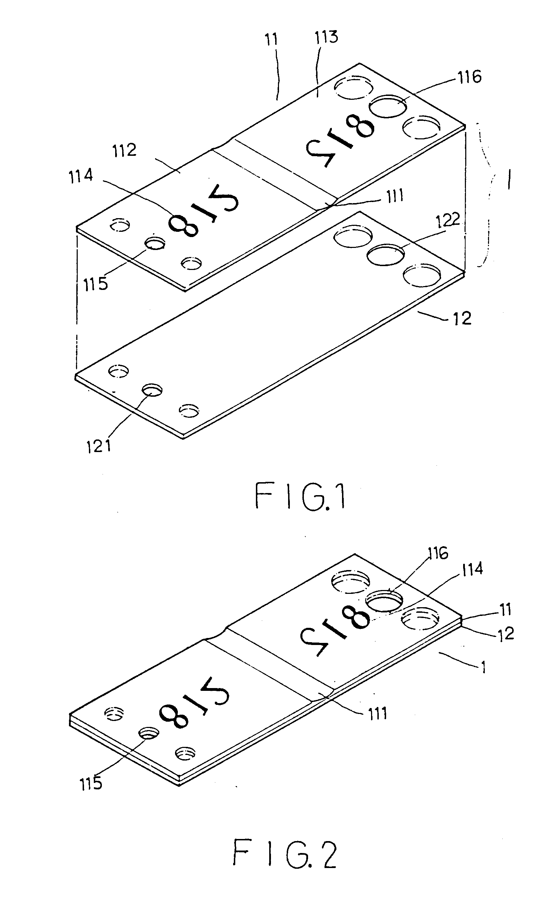

Wie es in den Fig. 1 und 2 gezeigt ist, umfaßt das Markenteil 1 zwei entsprechende und relativ dünne Schichten 11, 12 aus transparentem und biegsamem Kunststoffmaterial. Die erste Schicht 11 ist gleichmäßig in einen ersten Plattenabschnitt 112 und einen zweiten Plattenabschnitt 113 eingeteilt, wobei zwischen diesen eine querverlaufende Biegenut 111 liegt.

Der äußere Abschnitt jedes dieser Plattenabschnitte 112, 113 weist eine Reihe von Löchern 115 und 116 auf. Die Löcher 115 im ersten Plattenabschnitt 112 weisen einen geringeren Durchmesser als die Löcher 116 im zweiten Plattenabschnitt 113 auf. Die beiden Plattenabschnitte 112, 113 sind auf der der zweiten Schicht 12 gegenüberliegenden Seite mit entsprechenden Kennzeichen, z. B. Zahlen 114, umgekehrt zueinander markiert.

Die zweite Schicht 12 ist an die erste Schicht 11 angeklebt, sie besteht aus einem transparenten und biegsamem Material und dient als Versiegelungsfilm für die erste Schicht 11. Die beiden entgegengesetzten Endabschnitte der zweiten Schicht 12 sind mit zwei Lochreihen 121, 122 versehen, die so angeordnet sind, daß jedes Loch in der ersten Schicht 11 mit dem entsprechenden Loch in der zweiten Schicht 12 übereinstimmt.

Wie es in Fig. 3 gezeigt ist, umfaßt der Stift 2 einen hohlen Schaft 23. Dieser Schaft 23 endet an einem Ende mit einem konisch vergrößerten Abschnitt 231, der einen Längsschlitz 2310 aufweist, damit er biegsam wird und mit einer vorstehenden Oberfläche 234 versehen ist. Am anderen Ende weist der Schaft 23 einen Flansch 21 auf. Durch den Flansch 21 und den Schaft 23 erstreckt sich ein axialer Durchgang 22.

Ein zweiter Flansch 232 ist in einem Abstand vom konisch vergrößerten Abschnitt 231 auf dem Schaft 23 ausgebildet, so daß eine Umfangsnut 235 definiert wird, deren Breite vorzugsweise der Dicke des ersten Abschnittes des Markenteils entspricht, das die Löcher mit dem kleineren Durchmesser aufweist, wobei jedes Loch 115 des ersten Plattenabschnittes 112 mit dem Loch 121 in der zweiten Schicht 12 durch die Oberfläche 234 des konisch vergrößerten Abschnittes 231 vereinigt wird.

Sowohl die Abmessungen des konisch vergrößerten Abschnittes 231 als auch die des zweiten Flansches 232 sind so, daß es jedes Loch mit größerem Durchmesser, das durch Vereinigung des Loches 116 im zweiten Plattenabschnitt 113 und des Loches 122 in der zweiten Schicht 12 gebildet wird (das nachfolgend der Einfachheit halber als größeres Loch bezeichnet wird) gestattet, daß der konisch vergrößerte Abschnitt 231 und der zweite Flansch 232 unbehindert hindurchgehen können.

Wie es in Fig. 4 gezeigt ist, ist das Markenteil 1 im zusammengebauten Zustand an der Biegenut 111 gefaltet, wobei jedes der größeren Löcher und jedes der entsprechenden kleineren Löcher ausgerichtet sind. Der Stift 2 erstreckt sich durch das große Loch und das entgegengesetzte kleinere Loch des Markenteils 1, und die zweite Seite des Markenteils 1 wird in der Vertiefung 235 zwischen dem konisch vergrößerten Abschnitt 231 und dem zweiten Flansch 232 eingeschlossen. Dieser Montagevorgang kann mittels Lochzangen durchgeführt werden.

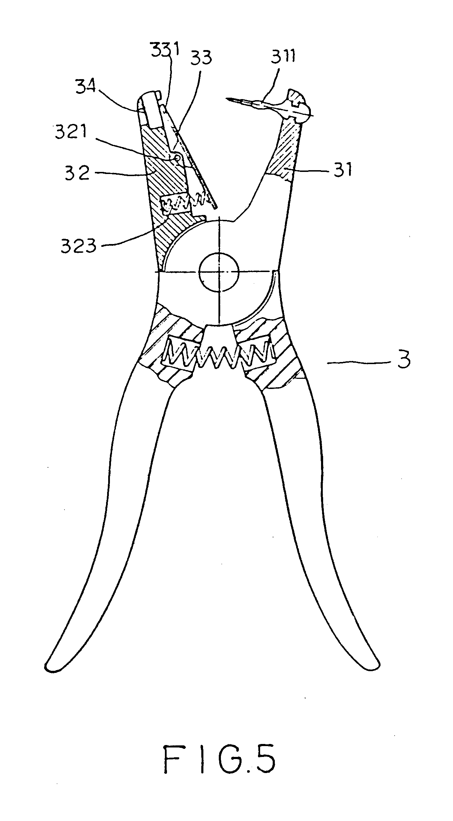

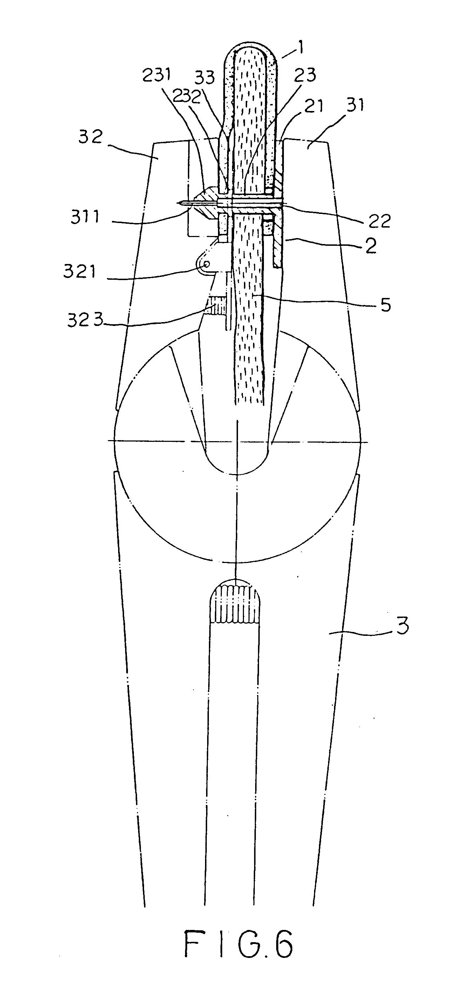

Wie es in den Fig. 5 und 6 gezeigt ist, weist die Lochzange 3 einen Backenabschnitt auf, der eine erste Backe 31 und eine zweite Backe 32 umfaßt. Ein Nagel 311 ist mit einem Ende an das obere Ende der ersten Backe 31 angebracht und erstreckt sich davon nach innen. Die zweite Backe 32 ist in ihrem oberen Endabschnitt in Querrichtung mit einer Bohrung 34 versehen und mit einer Führungsplatte 33 ausgestattet, die durch den Stift 321 am mittleren Abschnitt klappbar an den inneren Abschnitt der zweiten Backe 32 befestigt ist. Das untere Ende der Führungsplatte 33 ist an eine Feder 323 angebracht, die in einer Kammer in der zweiten Backe 32 angeordnet ist, und im freien Ende der Führungsplatte 33 ist ein Loch 331 ausgebildet.

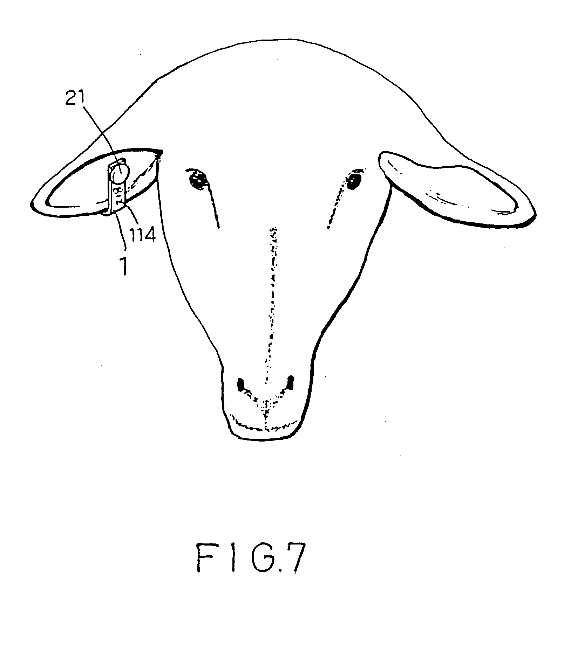

Bei Benutzung wird der Stift 2 beweglich auf der ersten Backe 31 befestigt, indem der Nagel 311 in dessen Durchgang 22 eingesetzt wird. Der Nagel 311 ist so lang, daß sein spitzes Ende 311 aus dem konisch vergrößerten Abschnitt 231 des Stiftes 2 hervorsteht. Die Marke 1 wird über der Kante des Ohres 5 dieses Tieres gefaltet. Danach wird der Nagel 311 auf eines der größeren Löcher des Markenteils 1 ausgerichtet und die Griffe der Zange 3 angefaßt, um ein Loch in das Ohr 5 des Tieres zu stanzen; gleichzeitig werden die Markenteile und der Stift miteinander verschlossen. Eine Teilansicht einer Kuh mit dieser Ohrmarke ist in Fig. 7 gezeigt.

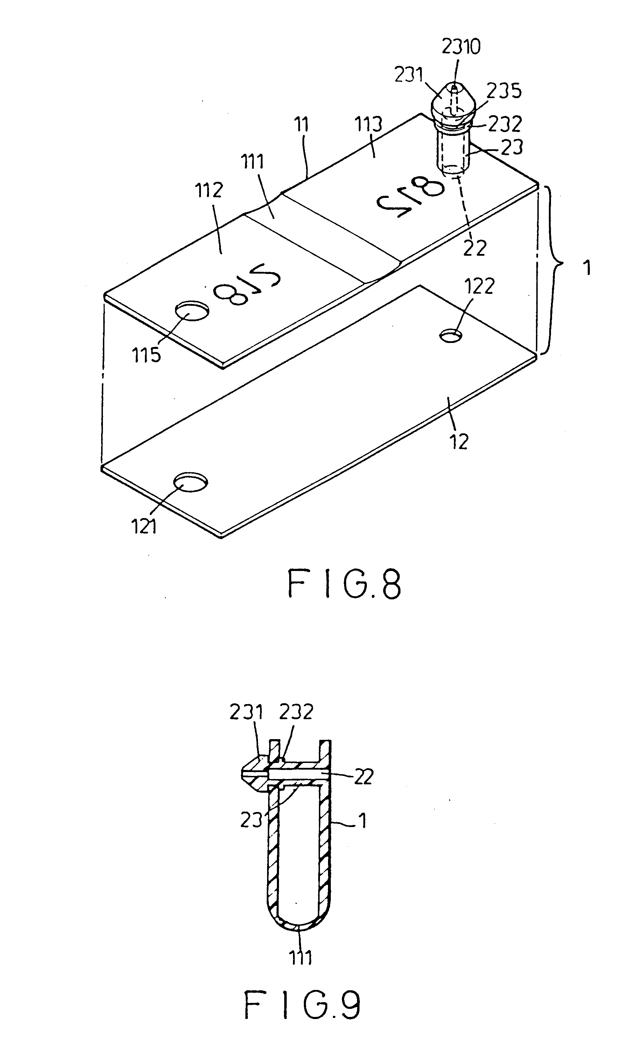

Wie es in Fig. 8 gezeigt ist, kann das erfindungsgemäße Markenteil 1 auch so aufgebaut sein, daß der Stift 2 einstückig mit dem zweiten Plattenabschnitt 113 ausgebildet ist, wobei eine Reihe von Löchern weggelassen wurde.

Der äußere Abschnitt des ersten Plattenabschnittes 112 weist ein Loch 115 auf, das mit dem Stift 2 ausgerichtet ist und einen geringeren Durchmesser als der konisch vergrößerte Abschnitt 231 aufweist.

Die zweite Schicht 12 weist an den beiden entgegengesetzten Endabschnitten ebenfalls geringe Veränderungen auf, sie hatte vorher zwei Reihen mit Löchern 121, 122, bei dieser Form weist sie nur zwei Löcher auf, der Rest bleibt unverändert.

Es wird nun auf Fig. 9 Bezug genommen. Die Veränderung des mit dem zweiten Plattenabschnitt 113 einstückig ausgebildeten Stiftes 2 gestattet eine leichte Benutzung der Marke.

## Patentansprüche

1. Ohrmarke für Tiere, **gekennzeichnet** durch:
   ein Markenteil (1) in Form einer Platte, wobei dieses Markenteil (1) aus zwei entsprechenden relativ dünnen Schichten (11, 12) mit entsprechenden Markierungen (114) zwischen beiden Schichten besteht, wobei die erste Schicht (11) aus einem transparenten und biegsamen Material besteht und in zwei gleiche Plattenabschnitte (112, 113) unterteilt ist, und zwischen diesen beiden Abschnitten eine Biegenut (111) und an der Außenseite des ersten Abschnitts (112) zumindest ein Loch (115) aufweist, und einen Stift (2) mit einem Schaft (23), einem konisch vergrößerten Abschnitt (231) an einem Ende, der einen Längsschlitz (2310) und eine vorstehende Oberfläche (234) aufweist, und einem Flansch (22) am anderen Ende.

2. Ohrmarke für Tiere nach Anspruch 1, dadurch **gekennzeichnet,** daß die zweite Schicht (12) aus einem transparenten und biegsamen Material ist und der Form der ersten Schicht (11) entspricht und an die Seite der ersten Schicht (11) mit den Markierungen (114) angebracht ist.

3. Ohrmarke für Tiere nach Anspruch 1 oder 2, dadurch **gekennzeichnet,** daß die zweite Schicht (12) Löcher (121, 122) aufweist, die auf der Seite angeordnet sind und mit den Löchern (115, 116) in der ersten Schicht (11) übereinstimmen, wenn beide Schichten miteinander verbunden sind.

4. Ohrmarke für Tiere nach einem der vorstehenden Ansprüche, dadurch **gekennzeichnet,** daß der Schaft (23) des Stiftes (2) auf seinem Umfang mit einem zweiten Flansch (232) versehen ist, der vom konisch vergrößerten Abschnitt (231) räumlich getrennt ist, und eine Nut (235) zwischen der vorstehenden Oberfläche (234) des konisch vergrößerten Abschnittes (231) und der Innenoberfläche des zweiten Flansches (232) definiert ist.

5. Ohrmarke für Tiere nach einem der vorstehenden Ansprüche, dadurch **gekennzeichnet,** daß die Breite der Vertiefung (235) der Dicke des ersten Abschnittes (11) des Markenteils (1) entspricht.

6. Ohrmarke für Tiere nach einem der vorstehenden Amsprüche, dadurch **gekennzeichnet,** daß die Abmessung des konisch vergrößerten Abschnittes (231) und des zweiten Flansches (232) des Stifts (2) mit dem Durchmesser des Loches (116) im zweiten Abschnitt (113) übereinstimmen.

7. Ohrmarke für Tiere, **gekennzeichnet** durch:
ein Plattenteil aus transparentem und biegsamem Material, das in zwei gleiche Abschnitte (112, 113) mit einer Biegenut (111) zwischen diesen beiden Abschnitten unterteilt ist, wobei das Markenteil aus zwei entsprechenden und relativ dünnen Schichten (11, 12) und entsprechenden Markierungen (114) zwischen diesen beiden Schichten und einem Stift (2) an der Außenseite des ersten Abschnittes (113) und einem Loch (115) an der Außenseite des zweiten Abschnittes (112) besteht,
wobei der Stift (2) einen Schaft (23) aufweist, der an einem Ende einen mit einem Längsschlitz versehenen, konisch vergrößerten Abschnitt (231) aufweist, der mit dem Loch (115) des Markenteils übereinstimmt und eine vorstehende Oberfläche (234) aufweist.

FIG.1

FIG.2

F I G.3

F I G.4

F I G.5

F I G. 6

FIG.7

FIG.8

FIG.9

FIG. 10

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | GB-A-161 270 (VENTURI) <br> * das ganze Dokument * <br> – – – | 1,4,5,7 | A 01 K 11/00 |
| A | FR-A-2 335 014 (CHEVILLOT S.A.R.L.) <br> * Anspruch 1; Figuren 1-7 * <br> – – – | 1,7 | |
| A | FR-A-2 577 380 (REBOUL) <br> – – – | | |
| A | FR-A-2 442 583 (VILLA-MASONE) <br> – – – | | |
| A | EP-A-0 031 227 (NEHLS) <br> – – – | | |
| A | NL-A-8 104 082 (DAWSONVILLE CORPORATION N.V.) <br> – – – – – | | |

**RECHERCHIERTE SACHGEBIETE (Int. Cl.5)**

A 01 K

Der vorliegende Recherchenbericht wurde für alle Patentansprüche erstellt

| Recherchenort | Abschlußdatum der Recherche | Prüfer |
|---|---|---|
| Den Haag | 11 April 91 | VON ARX V.U. |